# EUROPEAN PATENT SPECIFICATION

(11) **EP 2 767 362 B1**
(45) Date of publication and mention of the grant of the patent: **12.10.2016**
(21) Application number: 14152038.7
(22) Date of filing: 22.01.2014
(51) Int. Cl.: B23K 26/08, B23K 26/38, B23Q 1/48, B23Q 1/01

(54) **LASER PROCESSING APPARATUS AND LASER PROCESSING METHOD**
LASERVERARBEITUNGSGERÄT UND LASERVERARBEITUNGSVERFAHREN
APPAREIL DE TRAITEMENT LASER ET PROCÉDÉ DE TRAITEMENT AU LASER

(30) Priority: 22.01.2013 JP 2013009228
(43) Date of publication of application: 20.08.2014
(73) Proprietor: AMADA COMPANY LIMITED, Kanagawa 259-1196 (JP)
(72) Inventor: Amano, Kanehide, Isehara-shi, Kanagawa 259-1196 (JP); Matsuda, Morikatsu, Isehara-shi, Kanagawa 259-1196 (JP); Ohara, Toshihide, Isehara-shi, Kanagawa 259-1196 (JP); Kobayashi, Eiki, Isehara-shi, Kanagawa 259-1196 (JP)
(74) Representative: Grünecker Patent- und Rechtsanwälte PartG mbB

(56) References cited:
- EP-A2- 0 927 596
- WO-A1-2009/006031

## Description

### BACKGROUND OF THE INVENTION

### 1. Field of the Invention

The present invention relates to a laser processing apparatus and a laser processing method, as described in WO2009006031A1, on which the preambles of claims 1 and 6 are based, and particularly, to improvements of a mechanism and method for two-dimensionally moving a laser processing head.

### 2. Description of Related Art

A processing apparatus such as a laser processing apparatus for two-dimensionally processing a work generally employs orthogonal X and Y drive shafts. When cutting a circular hole around an original point set on a work, the laser processing apparatus activates the X and Y drive shafts to move a processing head along the circle. At this time, the laser processing apparatus is known to frequently cause a protrusive dynamic error called "quadrant glitches" at a boundary between quadrants.

The quadrant glitches occurs when the velocity of the processing head is zeroed at a quadrant boundary on one of the X-and Y-axes where the moving direction of the processing head is reversed to change static friction and kinetic friction from one to another in the operation of the orthogonal X and Y drive shafts. It is difficult to completely prevent the occurrence of the quadrant glitches.

To reduce the influence of the quadrant glitches, various techniques have been proposed, such as a technique of minimizing the occurrence of the quadrant glitches and a technique of suppressing the influence of an occurred quadrant glitches so that a final product may substantially have no problem. An example of such techniques is disclosed in Japanese Unexamined Patent Application Publication No. 2007-257515 (Patent Literature 1).

The technique disclosed in the Patent Literature 1 optimizes the torque correction t iming of servomotors that drive the orthogonal X and Y drive shafts, thereby stably suppressing the magnitude of a quadrant glitch irrespective of a velocity at which the processing head passes a quadrant boundary.

Laser processing has an advantage that it can process and cut a work at high speed. To utilize the advantage, the processing head of the laser processing apparatus must be moved at high speed along a predetermined locus, and for this, a drive system for driving the processing head must be controlled at high speed, too.

The related art disclosed in the Patent Literature 1, however, is unable to control and move the processing head at high speed, and therefore, is inappropriate for the laser processing. This is because, to suppress the magnitude of a quadrant glitch and reduce quadrant glitches-originated errors, the related art must carry out the torque correction that involves a large amount of computing operations to slow the controlling speed and moving speed of the processing head.

### SUMMARY OF THE INVENTION

The present invention provides a laser processing apparatus according to claim 1 and a laser processing according to claim 6 capable of accurately processing a work at high speed without quadrant glitches.

### BRIEF DESCRIPTION OF THE DRAWINGS

Figure 1 is a perspective view generally illustrating a laser processing apparatus according to an embodiment of the present invention;
Fig. 2 is a block diagram illustrating a configuration of the laser processing apparatus;
Figs. 3, 4, and 5 are perspective, top, and sectional views illustrating a head unit of the laser processing apparatus;
Fig. 6 is a top view illustrating a movable range of a linear mover arranged in the head unit;
Fig. 7 is a Venn diagram illustrating operation modes of the laser processing apparatus;
Fig. 8 is a model diagram illustrating the head unit of the laser processing apparatus;
Figs. 9 and 10 are views illustrating an example of a linear operation carried out in a mode A of the laser processing apparatus;
Figs. 11 and 12 are views illustrating an example of a circular operation carried out in the mode A;
Figs. 13 to 16 are views illustrating an example of a combinational operation carried out in the mode A;
Figs. 17 to 20 are views illustrating another example of the combinational operation carried out in the mode A;
Fig. 21 is a view illustrating an example of a processing pattern to be processed in a mode B of the laser processing apparatus;
Figs. 22 to 25 are views illustrating an example of operation carried out in the mode B to process the processing pattern of Fig. 21;
Fig. 26 is a view illustrating an example of operation carried out in a mode B1 of the laser processing apparatus; and
Fig. 27 is a view illustrating another example of operation carried out in the mode B1.

### DESCRIPTION OF PREFERRED EMBODIMENTS

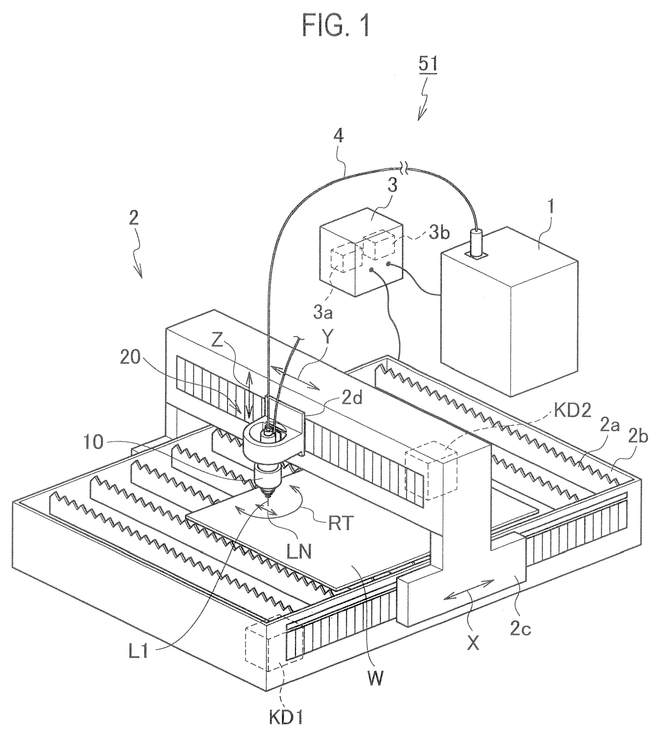

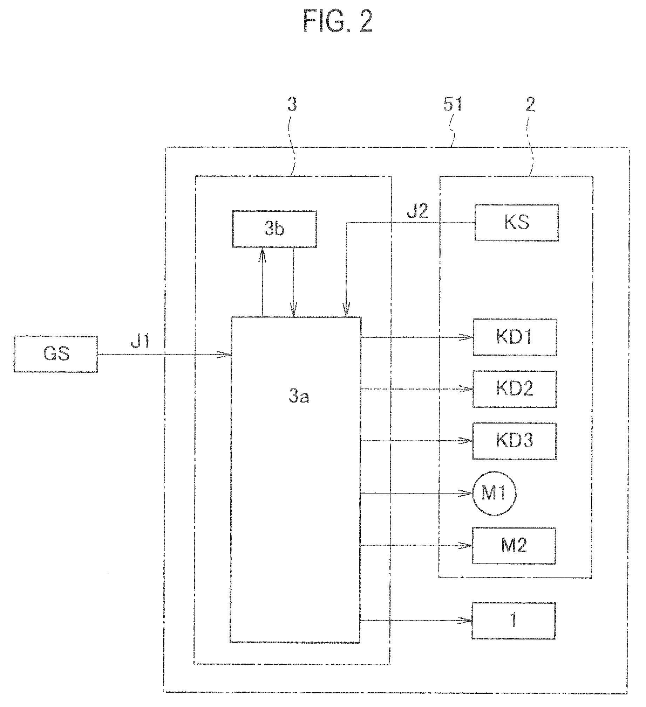

An embodiment of the present invention will be explained with reference to Figs. 1 to 27. First, a laser processing apparatus 51 according to the embodiment will generally be explained with reference to Figs. 1 and 2 in which Fig. 1 is a general perspective view illustrating the laser processing apparatus 51 and Fig. 2 is a block diagram illustrating a configuration of the laser processing apparatus 51.

The laser processing apparatus 51 emits a laser beam from a processing head 10 toward a work W to thereby process (cut, make a hole, and the like) the work W. Hereinafter, the laser beam emitted from the processing head 10 is referred to as an "irradiation laser beam L1".

The laser processing apparatus 51 employs, for example, a fiber laser and includes a fiber laser oscillator 1 serving as a laser source, a main body 2, and a controller 3. The main body 2 includes a head unit 20 having the processing head 10 to receive a laser beam from the fiber laser oscillator 1 and emit the irradiation laser beam L1 toward the work W so as to process the work W. The controller 3 includes a control part 3a and a storage part 3b, to wholly control the laser processing apparatus 51.

The fiber laser oscillator 1 generates a laser beam, which is supplied through a process fiber 4 to the processing head 10 of the head unit 20.

The controller 3 receives process information J1 including process programs from an external device GS such as a data server. The process information J1 includes, in addition to the process programs, information necessary for processing the work W such as the material and processing dimensions of the work W. The received process information J1 is stored in the storage part 3b and is referred to by the control part 3a.

The control part 3a generates, according to the process information J1 and positional information J2 (to be explained later), control instructions to control the fiber laser oscillator 1 and main body 2.

The main body 2 includes a process table 2b and an X-axis carriage 2c. The process table 2b has a plurality of pinholder-like skids 2a that are arranged in parallel with one another to support the work W. The X-axis carriage 2c is arranged on the process table 2b and is driven and moved by a driver KD1 in a direction (an X-axis direction) along the surface of the work W if the work W supported on the skids 2a is flat.

The X-axis carriage 2c has a Y-axis carriage 2d that is driven and moved by a driver KD2 in a Y-axis direction orthogonal to the X-axis direction along the surface of the work W.

The Y-axis carriage 2d has the head unit 20 that is driven and moved by a driver KD3 (not illustrated in Fig. 1) in a Z-axis direction orthogonal to the X- and Y-axis directions. The drivers KD1, KD2, and KD3 are controlled by the control part 3a.

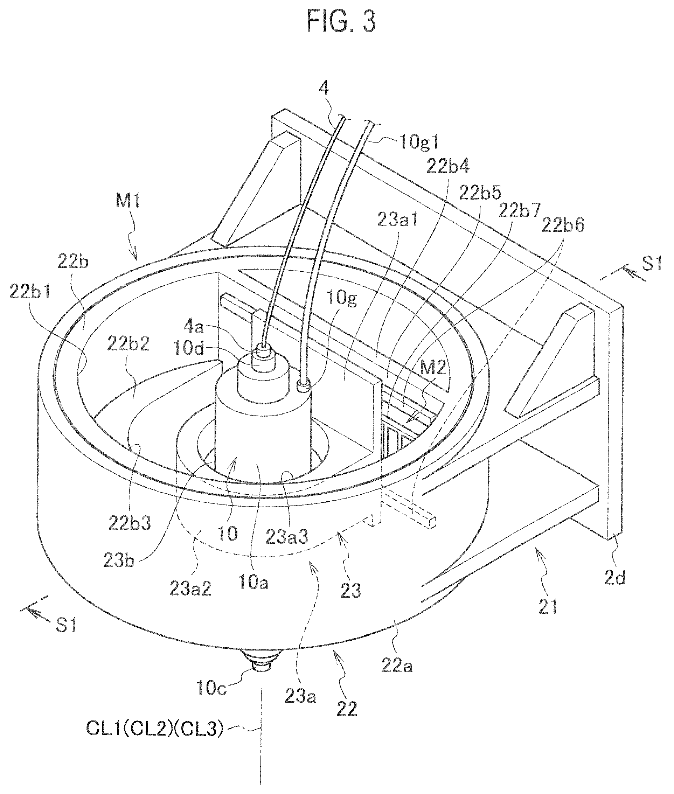

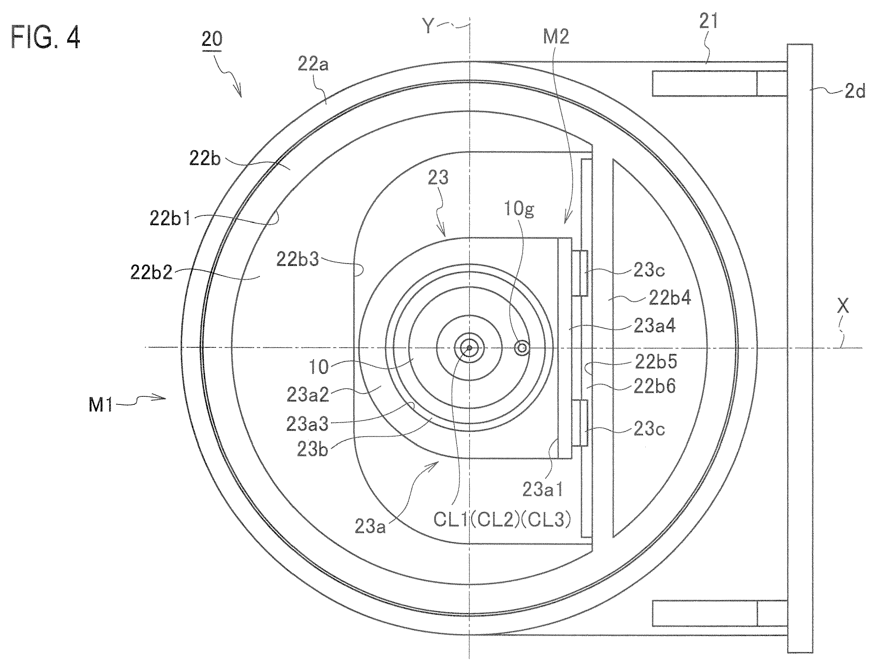

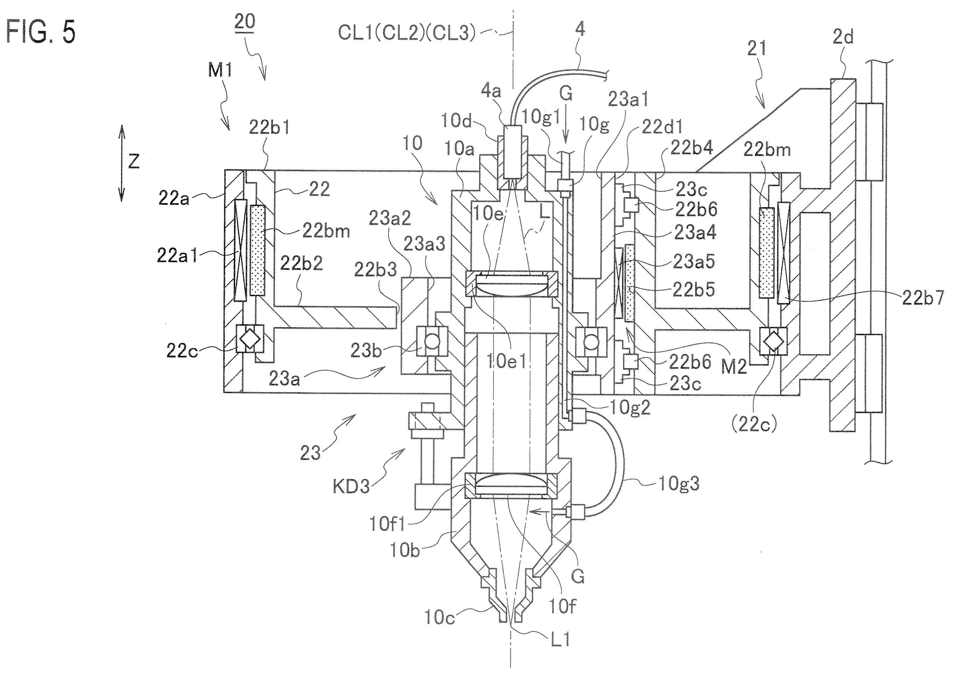

The head unit 20 will be explained with reference to Figs. 2 to 5. Figure 3 is a perspective view of the head unit 20, Fig. 4 a top view of the same, and Fig. 5 a sectional view along S1-S1 of Fig. 3.

The head unit 20 has a rotary driver 22 having a rotor 22b. The rotor 22b has a rotation axis CL1. The rotary driver 22 is positioned to vertically orient the rotation axis CL1 and is fixed to the Y-axis carriage 2d through a bracket 21.

The rotary driver 22 includes a hollow shaft motor (for example, a hollow shaft AC servomotor) M1, an annular housing 22a fixed to the Y-axis carriage 2d, and the rotor 22b that is fitted inside the housing 22a and is turned relative to the housing 22a around the rotation axis CL1. Hereinafter, the hollow shaft motor M1 is simply referred to as the "motor M1" . The rotor 22b has a bottomed ring shape having a circumferential wall 22b1 and a bottom wall 22b2.

As illustrated in Fig. 5, the housing 22a is an outer ring to rotatably support, through a bearing such as a cross roller bearing, the rotor 22b which is an inner ring. The housing 22a has a plurality of coils 22a1 to which a current is passed according to a predetermined pattern and the rotor 22b has a plurality of magnets 22bm. Amagnetic action between the coils 22a1 and the magnets 22bm turns the rotor 22b. Turning the rotor 22b includes a partial turn by a predetermined angle. Driving the motor M1, i.e., passing a current through the coils 22a1 of the rotary driver 22 is controlled by the control part 3a.

The bottom wall 22b2 of the rotor 22b is provided with an intermediate wall 22b4 uprightly extending in the Z-axis direction. In Fig. 4, the upright intermediate wall 22b4 corresponds to a chord of a circle defined by the circumferential wall 22b1 of the rotor 22b. The bottom wall 22b2 has an opening 22b3 having a long hole shape elongating in a diametral direction of the rotor 22b. The opening 22b3 contains the rotation axis CL1. In Figs. 4 and 5, the rotor 22b is positioned at a rotational position (rotational attitude) where the longitudinal direction of the opening 22b3 agrees with the Y-axis direction.

A surface 22b5 of the intermediate wall 22b4 on the rotation axis CL1 side is provided with a pair of rails 22b6 that extend in parallel with each other in a horizontal direction (the Y-axis direction in Fig. 4). The rails 22b6 are spaced from each other in the Z-axis direction. On the rails 22b6, a linear mover 23 is arranged to move on the rails 22b6.

The linear mover 23 has a linear mover base 23a, a radial bearing 23b, and the processing head 10. The linear mover base 23a includes a plate-like base 23a1 facing the surface 22b5 of the intermediate wall 22b4 and an annular head support 23a2 connected to the base 23a1. The radial bearing 23b is arranged in a through hole 23a3 of the head support 23a2. The processing head 10 is rotatably supported with the radial bearing 23b with respect to the head support 23a2 so that the processing head 10 may turn around a rotation axis CL2 that is a rotation axis of the radial bearing 23b. In Figs. 3 to 5, the linear mover 23 is at a position where the rotation axis CL2 agrees with the rotation axis CL1.

A counter face 23a4 of the base 23a1 opposing the intermediate wall 22b4 is provided with a plurality of blocks 23c that are fitted to the rails 22b6 and are movable on the rails 22b6. The counter face 23a4 is also provided with a plurality of coils 23a5 that pass a predetermined pattern of current. To face the coils 23a5, magnet plates 22b7 are arranged on the surface 22b5 of the intermediate wall 22b4.

A magnetic action between the coils 23a5 and the magnet plates 22b7 linearly moves the base 23a1 along the intermediate wall 22b4. Namely, in the linear mover 23 and rotor 22b, the coils 23a5 and magnet plates 22b7 form a linear motor M2. With the linear motor M2, the linear mover 23 can linearly reciprocate inside the rotor 22b with respect to the rotor 22b for a predetermined movable distance DL in a diametral direction of the rotor 22b. The movable distance DL is shorter than the diameter of the rotor 22b. Driving the linear motor M2, i.e., passing a current through the coils 23a5 is controlled by the control part 3a.

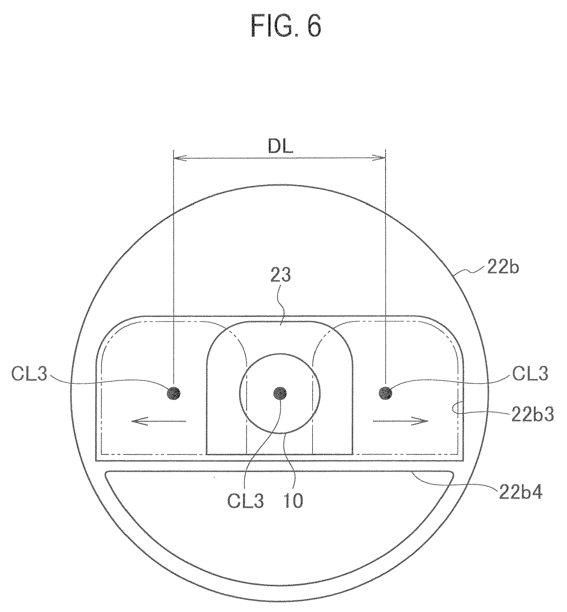

Figure 6 roughly illustrates the rotor 22b and linear mover 23 to explain the linear reciprocation of the linear mover 23. As virtually illustrated with two-dots-and-dash lines, the linear mover 23 is movable nearly from one end to the other end of the opening 22b3 of the rotor 22b as indicated with arrows. According to this movement, a center axis CL3 of the processing head 10 moves within the movable distance DL.

With this configuration, the laser beam L1 emitted from the processing head 10 travels along the center axis CL3. Namely, an irradiation position of the laser beam L1 is linearly movable within the range of the movable distance DL. The center axis CL3 on which the irradiation position of the laser beam L1 is present is in parallel with the rotation axis CL2 of the radial bearing 23b. In this embodiment, the rotation axis CL2 and center axis CL3 agree with each other.

The rotation axis CL2 of the radial bearing 23b extends in the Z-axis direction and is able to linearly reciprocate in a plane containing the rotation axis CL1 of the rotor 22b within a path containing the rotation axis CL1. In Figs. 3 to 5, the linear mover 23 is at a position where the rotation axis CL1 agrees with the rotation axis CL2.

The processing head 10 will be explained mainly with reference to Figs. 3 to 5. The processing head 10 has a main cylinder 10a, a movable cylinder 10b, and a nozzle 10c. The movable cylinder 10b is connected to a lower part of the main cylinder 10a and is movable in the Z-axis direction (vertical direction). The nozzle 10c is attached to a lower end of the movable cylinder 10b. Movement of the movable cylinder 10b in the Z-axis direction is realized by the driver KD3 such as a linear actuator under the control of the control part 3a.

An upper end of the main cylinder 10a has a fiber holder 10d. The fiber holder 10d is connected to a fiber connector 4a arranged at an end of the process fiber 4. Inside the main cylinder 10a, there is attached a collimator lens 10e with a holder 10e1. Under the collimator lens 10e inside the movable cylinder 10b, there is attached a condenser lens 10f with a holder 10f1.

When activated, the fiber laser oscillator 1 emits a laser beam L, which is downwardly emitted from the fiber connector 4a. The laser beam L is shaped by the collimator lens 10e into a parallel beam which is condensed by the condenser lens 10f and is emitted as the irradiation laser beam L1 from the nozzle 10c. The movable cylinder 10b is vertically moved to adjust a focal position of the radiated laser beam L1.

An upper end of the main cylinder 10a has a gas feeder 10g to feed an assist gas G. The gas feeder 10g is connected to a hose 10g1 that is connected to an assist gas source. The assist gas G is externally supplied through the hose 10g1 to the feeder 10g, is passed through a gas communication path 10g2 arranged inside the main cylinder 10a, is guided through an outer flexible pipe 10g3, and is fed into a space between the condenser lens 10f and the nozzle 10c in the movable cylinder 10b.

Positions of the parts moved by the drivers KD1 to KD3, motor M1, and linear motor M2 (these will be referred to as a drive system KD) are detected by a position detection system KS including encoders and sensors and are supplied as the positional information J2 to the control part 3a as illustrated in Fig. 2.

The laser processing apparatus 51 having the above-mentioned configuration moves an irradiation position of the laser beam L1 with the use of linear motion in the X-axis direction, linear motion in the Y-axis direction, rotation around the rotation axis CL1 as indicated with an arrow RT in Fig. 1 (this rotational motion is hereinafter referred to as the "rotational motion RT"), and linear motion in a diametral direction of the rotor 22b as indicated with an arrow LN in Fig. 1 (this linear motion is hereinafter referred to as the "linear motion LN"). These four kinds of motion are achievable independently or in an optional combination.

The processing head 10 is rotatable around the rotation axis CL2 by the radial bearing 23b with respect to the linear mover 23. Accordingly, without regard to how the above-mentioned four kinds of motion are achieved, the processing head 10 turns by itself so that the process fiber 4 and hose 10g1 connected to the processing head 10 are never twisted. Even if the processing head 10 turns around itself, the laser beam L1 travels along the rotation axis CL2 that agrees with the center axis CL3 of the processing head 10, and therefore, an irradiation position of the laser beam L1 on the work W never fluctuates.

Two-dimensional processing operations of the laser processing apparatus 51 will be explained. In the following explanation, X- and Y-axis motions are collectively referred to as a main-axis motion and the rotational motion RT and linear motion LN as a sub-axis motion.

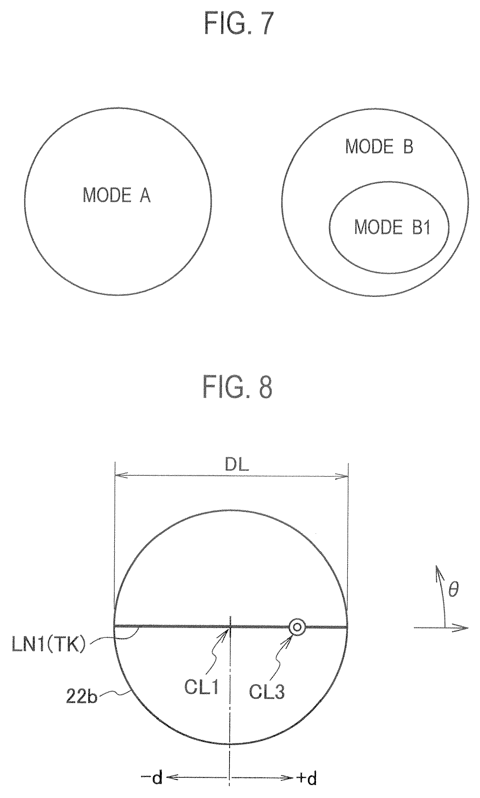

The control part 3a controls the operation of the laser processing apparatus 51 in a mode A and mode B as illustrated in Fig. 7. The mode A is a mode not to simultaneously execute the main-axis motion and sub-axis motion and the mode B is a mode to simultaneously execute the main-axis motion and sub-axis motion.

The mode B includes a mode B1 that is a special shape mode to process a special shape. The mode B1 is set in advance in the process information J1 or is prepared by the control part 3a according to the process information J1.

Each of the modes A and B will be explained in detail in connection with techniques of controlling the drive system KD to guide the laser beam L1 along various paths or loci on the work W. In the following explanation, the rotor 22b and the position of the center axis CL3 in the linear mover 23, i.e., an irradiation position of the laser beam L1 are modeled as illustrated in Fig. 8. Namely, in Fig. 8, a segment LN1 represents a linear motion path TK of the linear motion LN, a cross at the center of a circle represents the position of the rotation axis CL1 of the rotor 22b, and a double circle represents the position of the center axis CL3 of the processing head 10, i.e., the irradiation position of the laser beam L1.

When controlling the drive system KD, the control part 3a issues drive instructions for the X-axis carriage 2c and Y-axis carriage 2d according to an orthogonal coordinate system that is virtually set on the process table 2b. For a rotational movement of the rotor 22b, the control part 3a issues an instruction with a rotation angle θ(theta) starting from a position in which the linear motion path TK is on the X-axis as illustrated in Fig. 8. The rotation angle θ is plus (+) in a clockwise direction and minus (-) in a counterclockwise direction.

A position of the linear mover 23 on the linear motion path TK is instructed with, for example, a diametral distance d from the position of the rotation axis CL1 of the rotor 22b with plus (+) in one direction and minus (-) in the opposite direction as illustrated in Fig. 8. Instead of the absolute positions, the rotational and linear movements may be instructed with a rotational moving amount and a linear moving amount.

### Examples (i) to (iv) of the mode A will be explained.

### (i) Linear operation

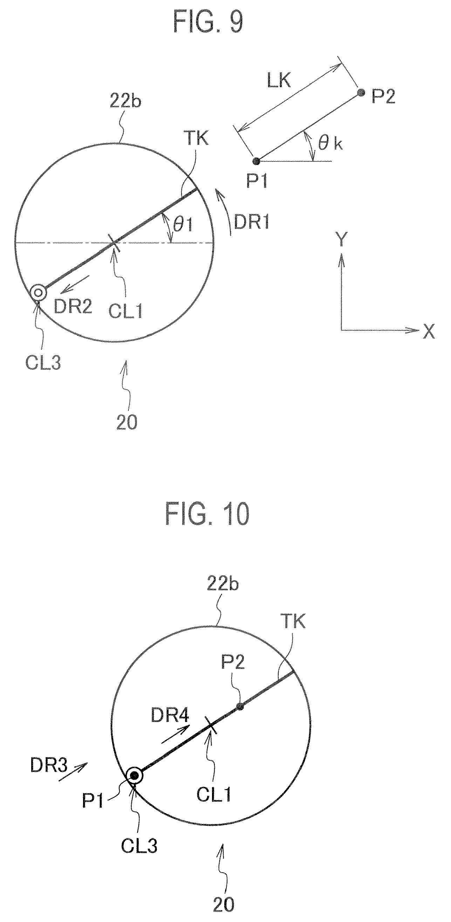

Figures 9 and 10 illustrate a linear operation in the mode A of the laser processing apparatus 51. A segment from P1 to P2 is a path or locus to be processed on the work W and the irradiation laserbeamL1 is linearlymovedalongthe segment P1-P2. In principle, the control part 3a keeps the rotation motion RT and linear motion LN stopped and drives only the X-axis carriage 2c and Y-axis carriage 2d to process the segment P1-P2. If a distance Lk between P1 and P2 of the linear operation path is shorter than the movable distance DL as illustrated in Fig. 9, the control part 3a carries out steps (i-1) to (i-4) mentioned below.
(i-1) The control part 3a turns the rotor 22b so that an angle θ1 (theta-1) between the linear operation path TK and the X-axis agrees with (or comes in parallel with) an inclination angle θk (theta-k) between the segment P1-P2 and the X-axis as indicated with an arrow DR1 in Fig. 9.
(i-2) The control part 3a linearly moves the linear mover 23 so that the center axis CL3 of the processing head 10 is positioned at an end of the linear operation path TK as indicated with an arrow DR2 in Fig. 9.
(i-3) The control part 3a drives the X-axis carriage 2c and Y-axis carriage 2d to move the head unit 20 so that the center axis CL3 of the processing head 10 agrees with the start point P1 as indicated with an arrow DR3 in Fig. 10.
(i-4) The control part 3a activates the fiber laser oscillator 1 to emit the laser beam L1 from the processing head 10 and drives the linear motor M2 to linearly move the linear mover 23 so that the center axis CL3 of the processing head 10 moves from the start point P1 to the end point P2 as indicated with an arrow DR4 in Fig. 10. When the center axis CL3 reaches the end point P2, the control part 3a stops the fiber laser oscillator 1.

Making a hole with the laser processing apparatus 51 will be explained.

### (ii) Circular operation

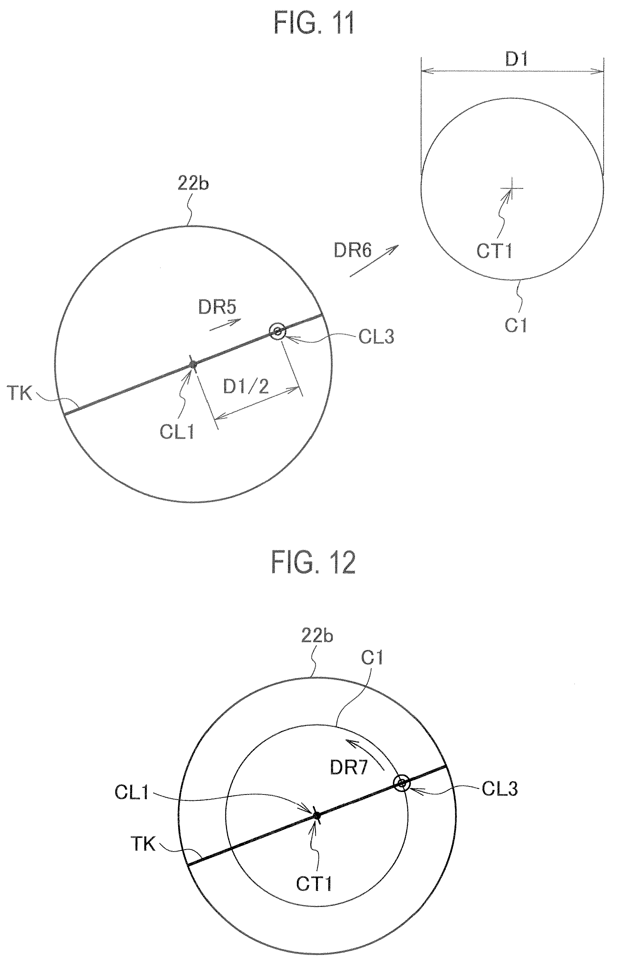

Figures 11 and 12 illustrate a circular operation in the mode A of the laser processing apparatus 51. In Fig. 11, a circular hole is formed along a circle C1 having a diameter θ1 on the work W by moving the laser beam L1 along the circle C1. If the diameter D1 of the circle C1 is shorter than the movable distance DL, i.e., if a radius D1/2 of the circle C1 is shorter than half of the movable distance DL, the control part 3a carries out steps (ii-1) to (ii-3) mentioned below. Comparison between the diameter D1 (or radius) and the movable distance DL may be carried out by the control part 3a, or may be specified in advance in the process information J1 and referred to by the control part 3a.
(ii-1) The control part 3a drives the linear motor M2 to move the linear mover 23 so that the center axis CL3 of the processing head 10 is separated away from the rotation axis CL1 of the rotor 22b by the radius D1/2 of the circle C1 as indicated with an arrow DR5 in Fig. 11.
(ii-2) The control part 3a drives the X-axis carriage 2c and Y-axis carriage 2d to move the head unit 20 so that the rotation axis CL1 of the rotor 22b agrees with the center CT1 of the circle C1 as indicated with an arrow DR6 in Fig. 11.
(ii-3) The control part 3a activates the fiber laser oscillator 1 to emit the laser beam L1 from the processing head 10 and drives the motor M1 to turn the rotor 22b once as indicated with an arrow DR7 in Fig. 12. The direction of the turn may be any one of plus and minus theta directions (±θ). In Fig. 12, the arrow DR7 indicates the plus theta direction (+θ₊). When the rotor 22b makes a turn, the control part 3a stops the fiber laser oscillator 1.

During the processing of the circular hole C1, the directions of the moving parts are unchanged to produce no zero-velocity point. Accordingly, no quadrant glitch occurs theoretically. The control part 3a can control the moving parts with instructions based on only the rotation angle θ without complicated operations. This results in moving the processing head 10 at high speed along the circular locus.

### (iii) Combination of Linear and Circular operations

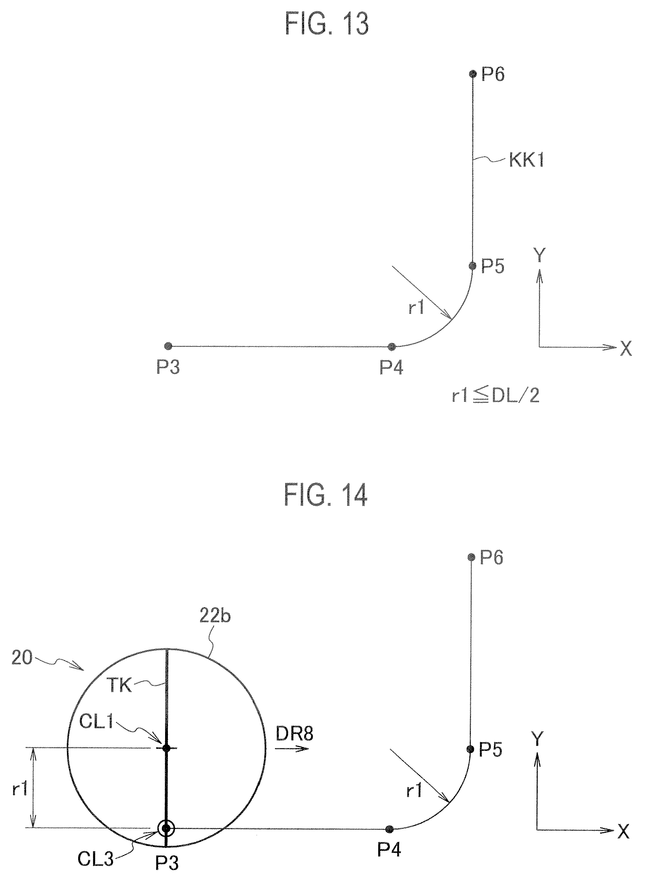

Figures 13 to 16 illustrate a combination of linear and circular operations in the mode A of the laser processing apparatus 51. The above-mentioned linear and circular operations can freely be combined in time series. As an example, a technique of driving the drive system KD to process a locus KK1 on the work W will be explained.

As illustrated in Fig. 13, the processing locus KK1 consists of a straight segment (first section) that is from a start point P3 to an intermediate point P4 and is in parallel with the X-axis, a quarter arc (second section) that is from the intermediate point P4 to an intermediate point P5 and has a radius r1, and a straight segment (third section) that is from the intermediate point P5 to an end point P6 and is in parallel with the Y-axis. Namely, the processing locus KK1 has a substantial L shape with a corner R.

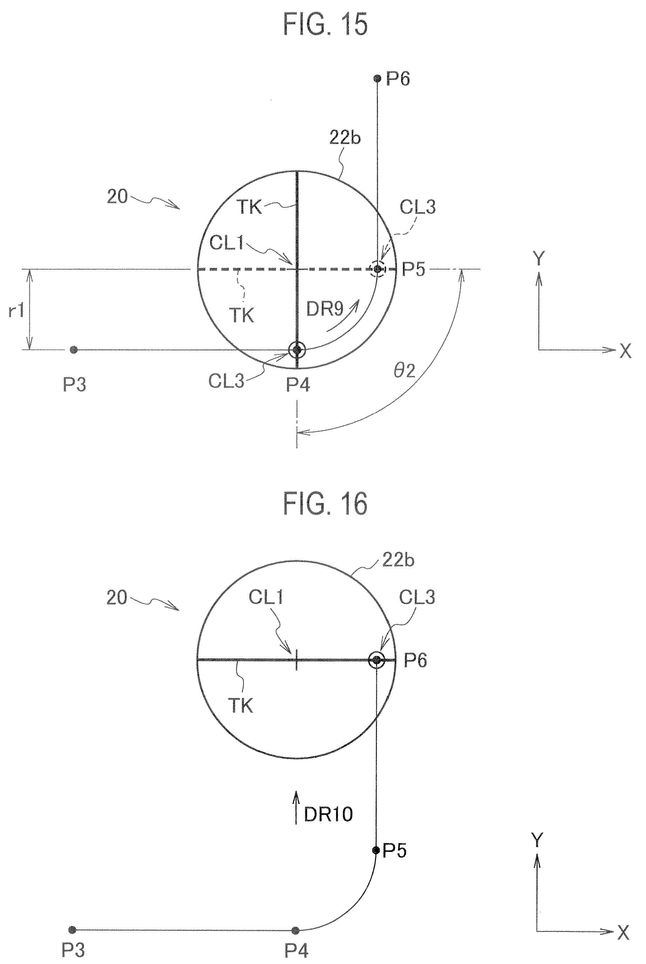

The processing locus KK1 corresponds to processing a product having a round corner. In this example, the radius r1 of the corner R is set to be equal to or shorter than half of the movable distance DL of the linear mover 23. Comparison between the radius r1 and half of the movable distance DL may be carried out by the control part 3a, or may be specified in advance in the process information J1 and referred to by the control part 3a.
(iii-1) The control part 3a turns the rotor 22b so that the linear operation path TK comes in parallel with the straight segment (third section) extending from the end point P5 of the circular arc (second section) in the processing locus KK1 as illustrated in Fig. 14. In this example, the third section from the intermediate point P5 to the end point P6 is linear and in parallel with the Y-axis, and therefore, the linear operation path TK is set to be parallel to the Y-axis.
(iii-2) The control part 3a drives the linear motor M2 to move the linear mover 23 along the linear operation path TK that is in parallel with the Y-axis, so that the center axis CL3 of the processing head 10 is spaced away from the rotation axis CL1 of the rotor 22b by a distance (temporarily depicted by "r1" in Fig. 14) equal to the radius r1. The spaced away direction is opposite (-Y) to the curving direction (+Y) of the circular arc (second section).
(iii-3) The control part 3a drives the X-axis carriage 2c and Y-axis carriage 2d to move the head unit 20 so that the center axis CL3 of the processing head 10 comes on the start point P3 as illustrated in Fig. 14.
(iii-4) The control part 3a activates the fiber laser oscillator 1 to emit the laser beam L1 from the processing head 10, and at the same time, drives the X-axis carriage 2c to move the head unit 20 so that the center axis CL3 of the processing head 10 moves from the start point P3 to the intermediate point P4 as indicated with an arrow DR8 in Fig. 14.
(iii-5) When the center axis CL3 of the processing head 10 reaches the intermediate point P4, the control part 3a stops the X-axis carriage 2c and drives the motor M1 to turn the rotor 22b by an angle θ2 (theta-2) so that the center axis CL3 moves along the second section extending from the intermediate point P4 to the intermediate point P5 as indicated with an arrow DR9 in Fig. 15. A distance from the rotation axis CL1 of the rotor 22b to the center axis CL3 of the processing head 10 is equal to the radius r1 of the second section, and therefore, a circular arc locus traced by the center axis CL3 agrees with the second section.
(iii-6) When the center axis CL3 of the processing head 10 reaches the intermediate point P5, the control part 3a stops the motor M1 and drives the Y-axis carriage 2d to linearly move the head unit 20 so that the center axis CL3 moves from the intermediate point P5 to the end point P6 as indicated with an arrow DR10 in Fig. 16.
(iii-7) When the center axis CL3 reaches the end point P6, the control part 3a stops the Y-axis carriage 2d and fiber laser oscillator 1.

When the radius of a given circular arc (corresponding to the second section in Fig. 13) is equal to or shorter than the movable distance DL of the linear mover 23, the above-mentioned steps (iii-1) to (iii-7) are able to process the given circular arc with the use of only the rotational motion RT without using the X- and Y-axis carriages 2c and 2d. In this case, no quadrant glitch occurs theoretically. In addition, the control part 3a is able to conduct control operations at high speed to improve a processing speed.

### (iv) Combination of Obliquely Intersecting Linear operations

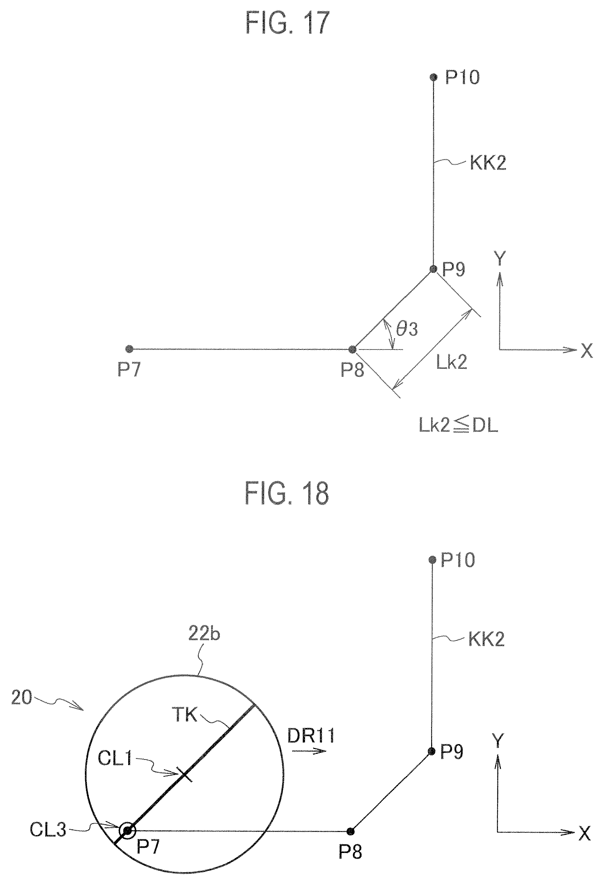

Figures 17 to 20 illustrate a combination of obliquely intersecting linear operations in the mode A of the laser processing apparatus 51. Linear motions that obliquely intersect may freely be combined with one another in time series. As an example, a technique of driving the drive system KD to process a locus KK2 on the work W will be explained.

As illustrated in Fig. 17, the processing locus KK2 includes a straight segment (fourth section) that extends from a start point P7 to an intermediate point P8 and is in parallel with the X-axis, a straight segment (fifth section) that extends from the intermediate point P8 to an intermediate point P9 and forms an angle θ3 (theta-3) with respect to the X-axis, and a straight segment (sixth section) that extends from the intermediate point P9 to an end point P10 and is in parallel with the Y-axis. Namely, the processing locus KK2 has a chamfered L shape.

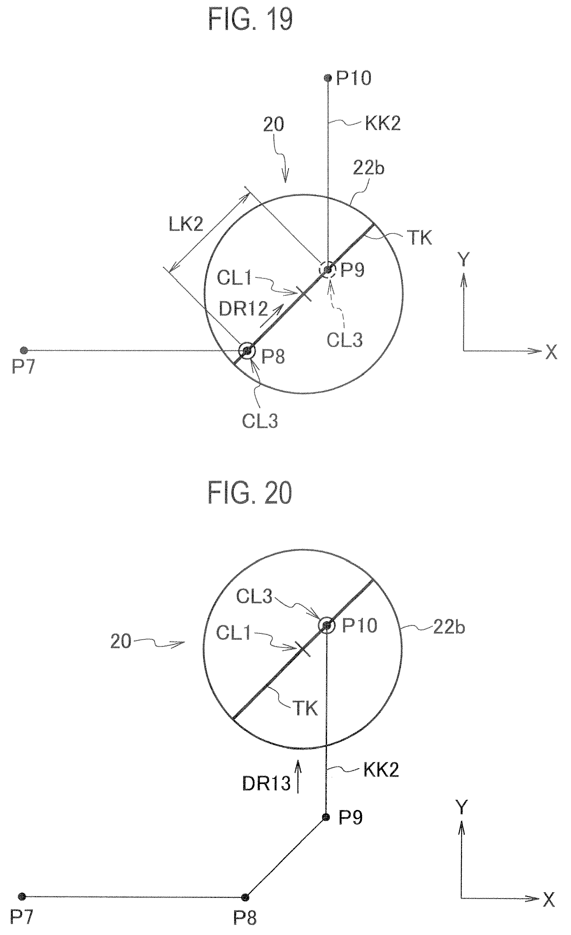

The processing locus KK2 corresponds to processing a product involving chamfering. A length Lk2 of the fifth section P8-P9 is set to be equal to or shorter than the movable distance DL of the linear mover 23.
(iv-1) The control part 3a drives the motor M1 to turn the rotor 22b so that the linear operation path TK comes in parallel with the oblique segment (fifth section) P8-P9 inclining with respect to the X-axis as illustrated in Fig. 18.
(iv-2) The control part 3a drives the linear motor M2 to move the linear mover 23 substantially to an end of the linear operation path TK that is in parallel with the fifth section P8-P9 of the processing locus KK2.
(iv-3) The control part 3a drives the X-axis carriage 2c and Y-axis carriage 2d to move the head unit 20 so that the center axis CL3 of the processing head 10 is positioned on the start point P7 of the processing locus KK2 as illustrated in Fig. 18.
(iv-4) The control part 3a activates the fiber laser oscillator 1 to emit the laser beam L1 from the processing head 10 and drives the X-axis carriage 2c to linearly move the head unit 20 so that the center axis CL3 of the processing head 10 moves from the start point P7 to the intermediate point P8 as indicated with an arrow DR11 in Fig. 18.
(iv-5) When the center axis CL3 reaches the intermediate point P8, the control part 3a stops the X-axis carriage 2c and drives the linear motor M2 to move the linear mover 23 so that the center axis CL3 moves for the distance Lk2 along the linear operation path TK from the intermediate point P8 to the intermediate point P9 as indicated with an arrow DR12 in Fig. 19.
(iv-6) When the center axis CL3 of the processing head 10 reaches the intermediate point P9, the control part 3a stops the linear motor M2 and drives the Y-axis carriage 2d to linearly move the head unit 20 so that the center axis CL3 moves from the intermediate point P9 to the end point P10 as indicated with an arrow DR13 in Fig. 20.
(iv-7) When the center axis CL3 reaches the end point P10, the control part 3a stops the Y-axis carriage 2d and fiber laser oscillator 1.

The position of the center axis CL3 of the processing head 10 (the linear mover 23) adjusted in the step (iv-2) along the linear operation path TK is not limited to an end of the linear operation path TK. The position of the center axis CL3 on the linear operation path TK is optional if the linear mover 23 is movable for the distance Lk2 within the range of the linear operation path TK.

If the chamfering length Lk2 is in the range of the movable distance DL, the above-mentioned steps (iv-1) to (iv-7) are able to process the processing locus KK2 involving the oblique segment (fifth section) P8-P9 with the use of only the linear motion LN without using the X- and Y-axis carriages. In this case, the control part 3a is able to carry out control operations at high speed to improve a processing speed.

The above-mentioned steps (i) to (iv) are achievable on any processing locus involving a straight segment that is not in parallel with the X-axis or Y-axis.

An example of the mode B will be explained. The mode B simultaneously carries out the main-axis motion involving the X-axis carriage 2c and Y-axis carriage 2d and the sub-axis motion involving the rotational motion RT and linear motion LN.

### (v) Repetitive shape operation

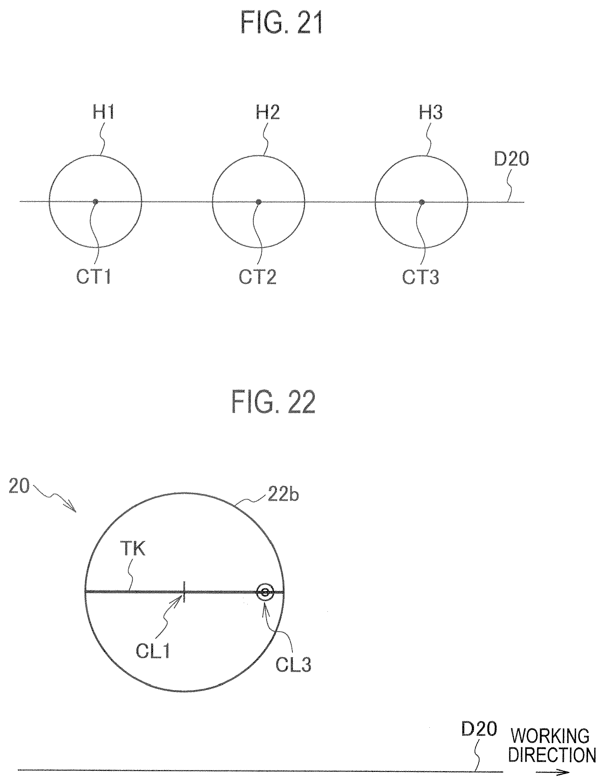

Figures 21 to 25 illustrate a repetitive shape operation in the mode B of the laser processing apparatus 51. An independent pattern is repeatedly set in a given direction and the irradiation laser beam L1 is moved along the shape of each pattern. An example of this will be explained with reference to Fig. 21 in which a plurality of circles H1 to H3 are processed in series on the work W along a straight line D20.

The X-axis carriage 2c and Y-axis carriage 2d are driven to move the head unit 20 along the straight line D20 that passes through centers CT1 to CT3 of the circles H1 to H3. During this operation, the rotational motion RT and linear motion LN are simultaneously carried out.

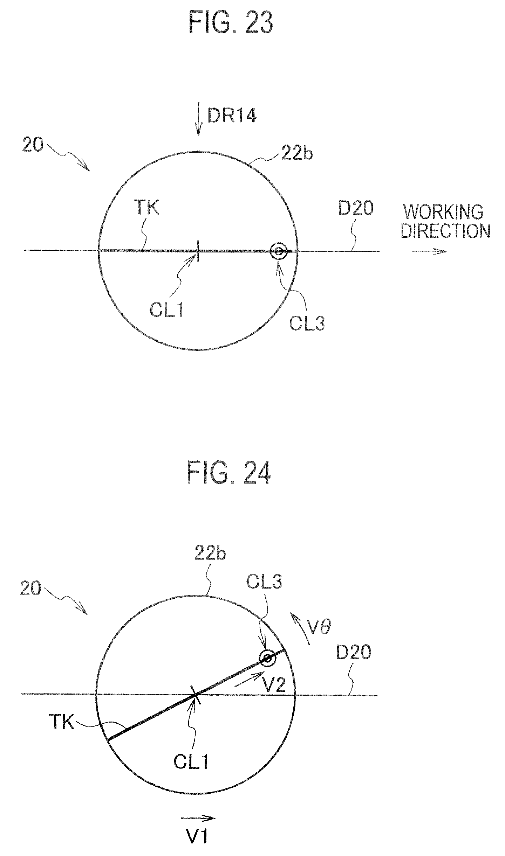

A technique of moving the laser beam L1 along the first circle H1 will be explained.
(v-1) The control part 3a drives the motor M1 to turn the rotor 22b so that the linear operation path TK comes in parallel with the straight line D20. At the same time, the control part 3a drives the linear motor M2 to move the linear mover 23 so that the center axis CL3 of the processing head 10 is positioned on the advancing side (processing side) of the rotation axis CL1 of the rotor 22b as illustrated in Fig. 22.
(v-2) The control part 3a drives the X-axis carriage 2c and Y-axis carriage 2d to move the head unit 20 so that the center axis CL3 of the processing head 10 comes on the straight line D20 as indicated with an arrow DR14 in Fig. 23.
(v-3) The control part 3a drives the X-axis carriage 2c and Y-axis carriage 2d to start moving the head unit 20 at a velocity V1 in a processing direction, and at the same time, activates the fiber laser oscillator 1 to emit the laser beam L1 from the processing head 10. At the start of emission of the laser beam L1, the control part 3a drives the motor M1 to turn the rotor 22b at an angular velocity Vθ (V-theta) and drives the linear motor M2 to move the linear mover 23 at a velocity V2 as illustrated in Fig. 24. The control part 3a computes and sets the velocities V1, V2, and Vθ so that a locus traced by the center axis CL3 of the processing head 10 agrees with the shape of the circle H1. For example, if the velocity V1 and angular velocity Vθ are temporally constant, the velocity V2 is a function V2 (t) that changes depending on time and moving direction.

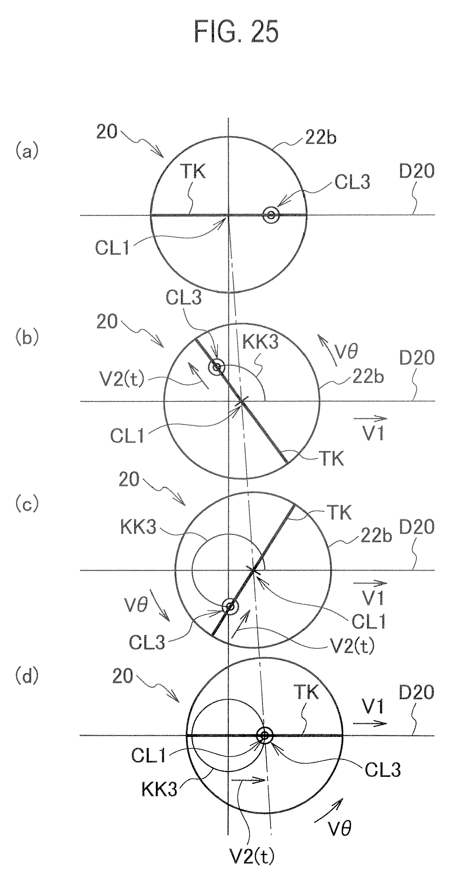

Thereafter, as illustrated in Figs. 25 (a) to 25 (d), the control part 3a continuously turns the rotor 22b so that the center axis CL3 of the processing head 10 draws the circle. In Fig. 25(a), the irradiation laser beam L1 starts to be emitted and the rotor 22b starts to be turned at the angular velocity V-theta. At this time, the head unit 20 is moving along the straight line D20 at the constant velocity V1.

In Fig. 25 (b), the angular velocity V-theta and velocity V1 are unchanged and the rotor 22b passes a rotation angle of 90 degrees. In consideration of the rotor 22b turning at the constant angular velocity Vθ and the head unit 20 linearly moving at the constant velocity V1, the control part 3a computes the position of the center axis CL3 of the processing head 10 on the linear operation path TK and the linear velocity V2(t) of the linear mover 23 so that the center axis CL3 draws the circle. According to the computed velocity V2(t), the control part 3a drives the linear motor M2 to move the linear mover 23.

In Fig. 25 (c), the rotor 22b passes a rotation angle of 180 degrees. In Fig. 25(d), the rotor 22b reaches a rotation angle of 360 degrees.
(v-4) In Fig. 25 (d), a locus KK3 traced by the center axis CL3 of the processing head 10 forms a circle. At this time, the control part 3a stops the fiber laser oscillator 1 and rotor 22b.
(v-5) To deal with the next circle H2, the control part 3a continuously drives the X-axis carriage 2c and Y-axis carriage 2d to move the head unit 20 at the velocity V1 and repeats the above-mentioned steps.

Amoving path of the head unit 20 achieved by the X-axis carriage 2c and Y-axis carriage 2d is not limited to a straight line. It may be a curved line, a combination of straight lines, or a combination of straight and curved lines. The mode B may be realized by separately carrying out the linear and circular motions of the operation (iii) of the mode A in time series. The mode B, i.e., the simultaneous mode, however, is able to shorten a processing time because the head unit 20 is always moved along the straight line D20.

### Special shape operation

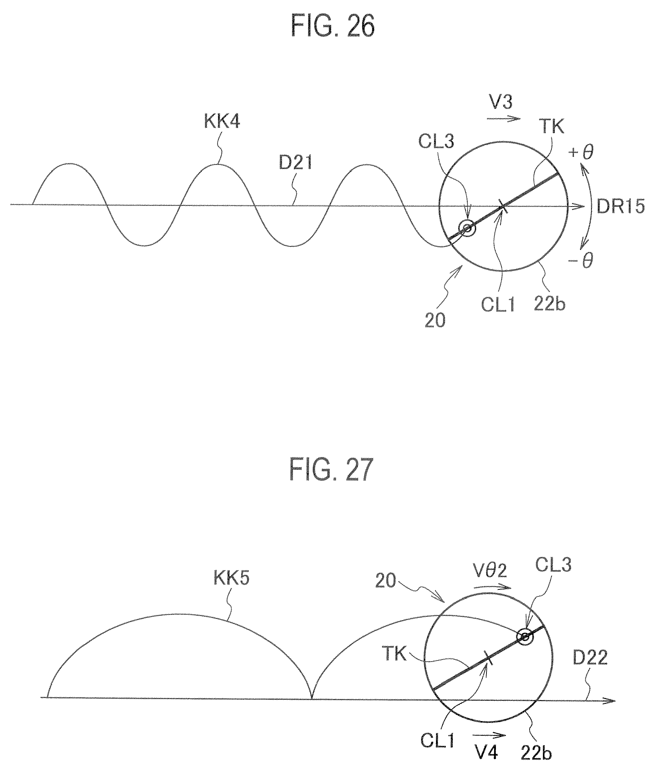

Figures 26 and 27 illustrate special shape operations in the mode B1 of the laser processing apparatus 51. An example of the special shape operation in the mode B1 will be explained. The head unit 20 is moved by simultaneously driving the X-axis carriage 2c and Y-axis carriage 2d and by executing one of the rotational motion RT and linear motion LN. This operation is able to deal with a shape that is continuous in a moving direction.

### Zigzag shape operation

In Fig. 26, a zigzag shape (KK4) extending in the direction of a straight line D21 is processed on the work W.

The control part 3a drives the X-axis carriage 2c and Y-axis carriage 2d to move the head unit 20 in the processing direction along the straight line D21 on which the rotation axis CL1 of the rotor 22b is positioned. At the same time, the control part 3a drives the motor M1 to turn the rotor 22b alternately in plus and minus theta directions (±θ) with the center axis CL3 of the processing head 10 being out of the rotation axis CL1.

This result in forming the zigzag locus KK4 that alternately crosses the straight line D21. The zigzag locus KK4 realizes, for example, laser weaving welding.

### Other operations

Similarly, the processing head 10 having the center axis CL3 may be moved along any special shape such as a cycloid curve and an involute curve.

In the circular operation (ii) of Fig. 11, the radius of the circle C1 may exceed the movable distance DL of the linear mover 23 having the processing head 10. In this case, the X- and Y-axis two-dimensional motions are carried out to follow the circle C1. However, circles or circular arcs to be cut in the work W frequently have a radius of 100 mm or smaller, and therefore, if the movable distance DL of the linear mover 23 is set to about 100 mm, such circles and circular arcs are processible without quadrant glitches.

The control part 3a is capable of controlling the rotational motion RT and linear motion LN not only by issuing instructions for a rotation angle θ and diametral distance d but also by issuing instructions for polar coordinate values converted from X-Y coordinate values.

The present invention is not limited to the embodiments, configurations, or steps mentioned above but allows various modifications without departing from the scope of the appended claims. The kinds and details of the drive system KD, motor M1, and linear motor M2 are not particularly limited.

The controller 3 is installable in one of the fiber laser oscillator 1 and main body 2.

Although not illustrated in Figs. 1 to 5, the top face of the rotor 22b may be provided with a bellows cover to cover the rotor 22b except the processing head 10, to protect the rotor 22b and prevent dust from entering the rotor 22b. The laser source is not limited to the fiber laser. It may be a solid-state laser such as YAG, or a carbon dioxide laser. The main axes, i.e., the X- and Y-axes may not be always orthogonal to each other. They may obliquely cross each other and allow the X- and Y-axis carriages 2c and 2d to two-dimensionally move along the axes, respectively.

The present invention provides an effect of carrying out laser processing at high accuracy and high speed without causing quadrant glitches.

## Claims

1. A laser processing apparatus (51) for laser-processing a work (W), said laser processing apparatus comprising
a table (2b) for placing the work thereon,
a processing head (10) for emitting a laser beam (L1) toward the work placed on the table, a head unit (20) for supporting the processing head (10),
a first mover (2c) for moving the head unit (20) along the table along a first axis (X);
a second mover (2d) for moving the head unit (20) along the table along a second axis (Y) that crosses the first axis (X);
a rotor (22b) supported in the head unit (20) and turnable around a third axis (CL1) that is orthogonal to the first and second axes (X, Y); and
a linear mover (23) supported inside the rotor (22b) for supporting the processing head (10) so that the laser beam emitted by the processing head (10) advances along a fourth axis (CL3) that is parallel to the third axis (CL1), and for linearly moving the processing head (10) so that the fourth axis (CL3) is linearly moveable in both directions along a diameter of the rotor for a predetermined movable distance (DL) that is shorter than the diameter of the rotor,
**characterized in that**
the predetermined moveable distance (DL) is a path that contains the third axis (CL1).

2. The laser processing apparatus of claim 1, wherein the linear mover (23) supports the processing head (10) so that the processing head (10) freely turns around the fourth axis (CL3).

3. The laser processing apparatus of claim 1 or 2, wherein the head unit (20) includes a hollow shaft motor (M1); and the rotor (22b) is a rotor of the hollow shaft motor.

4. The laser processing apparatus of any one of claims 1 to 3, wherein the laser beam (L1) emitted from the processing head (10) is supplied from a laser oscillator (1) through an optical fiber (4).

5. The laser processing apparatus of any one of claims 1 to 4, further comprising a control part (3a) that moves the laser beam along the circle or circular arc only by turning the rotor (22b) if a processing path (KK1) traced by the laser beam (L1) on the work (W) includes a circle or circular arc and if a radius of the circle or circular arc is equal to or shorter than half of the predetermined movable distance (DL).

6. A laser processing method of processing a work (W) with the laser processing apparatus (51) according to any of claims 1 to 5, said laser processing method comprising:
if a processing path (KK1) to be traced by the laser beam emitted to the work includes a circle or circular arc, comparing a radius of the circle or circular arc with half of the predetermined movable distance by use of the control part; and
if the radius of the circle or circular arc is determined to be shorter than half of the predetermined movable distance, moving the laser beam along the circle or circular arc only by turning the rotor.

## Patentansprüche

1. Laser-Bearbeitungsvorrichtung (51) für Laser-Bearbeitung eines Werkstücks (W), wobei die Laser-Bearbeitungsvorrichtung umfasst:
einen Tisch (2b) zum Auflegen des Werkstücks,
einen Bearbeitungs-Kopf (10), mit denen ein Laserstrahl (L1) auf das auf den Tisch aufgelegte Werkstück zu emittiert wird,
eine Kopf-Einheit (20) zum Tragen des Bearbeitungs-Kopfes (10),
eine erste Bewegungseinrichtung (2c), mit der die Kopf-Einheit (20) entlang einer ersten Achse (X) an dem Tisch entlang bewegt wird;
eine zweite Bewegungseinrichtung (2d), mit der die Kopf-Einheit (20) entlang einer zweiten Achse (Y), die die erste Achse (X) schneidet, an dem Tisch entlang bewegt wird;
einen Rotor (22b), der in der Kopf-Einheit (20) gelagert ist und um eine dritte Achse (CL1) herum gedreht werden kann, die rechtwinklig zu der ersten und der zweiten Achse (X, Y) ist; sowie
eine Linear-Bewegungseinrichtung (23), die im Inneren des Rotors (22b) gelagert ist und mit der der Bearbeitungs-Kopf (10) so gelagert wird, dass sich der von dem Bearbeitungs-Kopf (10) emittierte Laserstrahl entlang einer vierten Achse (CL3) ausbreitet, die parallel zu der dritten Achse (CL1) ist, und mit der der Bearbeitungs-Kopf (10) so bewegt wird, dass die vierte Achse (CL3) über eine vorgegebene Bewegungsstrecke (DL), die kürzer ist als der Durchmesser des Rotors, an einem Durchmesser des Rotors entlang linear in beiden Richtungen bewegt werden kann,
**dadurch gekennzeichnet, dass**
die vorgegebene Bewegungsstrecke (DL) ein Weg ist, der die dritte Achse (CL1) einschließt.

2. Laser-Bearbeitungsvorrichtung nach Anspruch 1, wobei die Linear-Bewegungseinrichtung (3) den Bearbeitungs-Kopf (10) so lagert, dass sich der Bearbeitungs-Kopf (10) frei um die vierte Achse (CL3) herum dreht.

3. Laser-Bearbeitungsvorrichtung nach Anspruch 1 oder 2, wobei die Kopf-Einheit (20) einen Hohlwellen-Motor (M1) enthält und der Rotor (22b) ein Rotor des Hohlwellen-Motors ist.

4. Laser-Bearbeitungsvorrichtung nach einem der Ansprüche 1 bis 3, wobei der Laserstrahl (L1), der von dem Bearbeitungs-Kopf (10) emittiert wird, von einem Laser-Oszillator (1) über eine Lichtleitfaser (4) zugeführt wird.

5. Laser-Bearbeitungsvorrichtung nach einem der Ansprüche 1 bis 4, die des Weiteren umfasst:
einen Steuer-Teil (3a), der den Laserstrahl an dem Kreis oder Kreisbogen entlang bewegt, indem lediglich der Rotor (22b) gedreht wird, wenn ein von dem Laserstrahl (L1) durchlaufener Bearbeitungs-Weg (KK1) auf dem Werkstück (W) einen Kreis oder Kreisbogen einschließt und wenn ein Radius des Kreises oder Kreisbogens genauso groß ist wie oder kürzer als die Hälfte der vorgegebenen Bewegungsstrecke (DL).

6. Laser-Bearbeitungsverfahren zum Bearbeiten eines Werkstücks (W) mit der Laser-Bearbeitungsvorrichtung (51) nach einem der Ansprüche 1 bis 5, wobei das Laser-Bearbeitungsverfahren umfasst:
wenn ein von dem auf das Werkstück emittierten Laserstrahl zu durchlaufender Bearbeitungs-Weg (KK1) einen Kreis oder Kreisbogen einschließt, Vergleichen eines Radius des Kreises oder Kreisbogens mit der Hälfte der vorgegebenen Bewegungsstrecke unter Verwendung des Steuer-Teils; und
wenn festgestellt wird, dass der Radius des Kreises oder Kreisbogens kürzer ist als die Hälfte der vorgegebenen Bewegungsstrecke, Bewegen des Laserstrahls an dem Kreis oder Kreisbogen entlang, indem lediglich der Rotor gedreht wird.

## Revendications

1. Dispositif de traitement laser (51) pour traiter une pièce (W) au laser, ledit dispositif de traitement laser comprenant :
une table (2b) pour y placer la pièce,
une tête de traitement (10) pour émettre un faisceau laser (L1) vers la pièce placée sur la table,
une unité de tête (20) pour supporter la tête de traitement (10),
un premier dispositif de déplacement (2c) pour déplacer l'unité de tête (20) sur la table le long d'un premier axe (X) ;
un second dispositif de déplacement (2d) pour déplacer l'unité de tête (20) sur la table le long d'un deuxième axe (Y) qui coupe le premier axe (X) ;
un rotor (22b) supporté sur l'unité de tête (20) et que l'on peut faire tourner autour d'un troisième axe (CL1) qui est orthogonal aux premier et deuxième axes (X, Y) ; et
un dispositif de déplacement linéaire (23) supporté à l'intérieur du rotor (22b) pour supporter la tête de traitement (10) de sorte que le faisceau laser émis par la tête de traitement (10) avance le long d'un quatrième axe (CL3) qui est parallèle au troisième axe (CL1) et pour déplacer la tête de traitement de façon linéaire (10), de sorte que le quatrième axe (CL3) peut être déplacé de façon linéaire dans les deux directions le long du diamètre du rotor sur une distance de déplacement prédéterminée (DL) qui est plus courte que le diamètre du rotor,
**caractérisé en ce que**
la distance de déplacement prédéterminée (DL) est un trajet qui contient le troisième axe (CL1).

2. Dispositif de traitement laser selon la revendication 1, dans lequel le dispositif de déplacement linéaire (23) supporte la tête de traitement (10) de sorte que la tête de traitement (10) tourne librement autour du quatrième axe (CL3).

3. Dispositif de traitement laser selon la revendication 1 ou 2, dans lequel l'unité de tête (20) comporte un moteur à arbre creux (M1) ; et le rotor (22b) est le rotor du moteur à arbre creux.

4. Dispositif de traitement laser selon l'une quelconque des revendications 1 à 3, dans lequel le faisceau laser (L1) émis par la tête de traitement (10) est fourni par un oscillateur laser (1) à travers une fibre optique (4).

5. Dispositif de traitement laser selon l'une quelconque des revendications 1 à 4, comprenant en outre
une partie de commande (3a) qui déplace le faisceau laser sur le cercle ou l'arc de cercle uniquement en faisant tourner le rotor (22b) si le trajet de traitement (KK1) tracé par le faisceau laser (L1) sur la pièce (W) comporte un cercle ou un arc de cercle et si le rayon du cercle ou de l'arc de cercle est inférieur ou égal à la moitié de la distance de déplacement prédéterminée (DL).

6. Procédé de traitement au laser pour traiter une pièce (W) au moyen du dispositif de traitement laser (51) selon l'une quelconque des revendications 1 à 5, ledit procédé de traitement au laser comprenant :
si le trajet de traitement (KK1) destiné à être tracé par le faisceau laser émis sur la pièce comporte un cercle ou un arc de cercle, la comparaison du rayon du cercle ou de l'arc de cercle à la moitié de la distance de déplacement prédéterminée en utilisant la partie de commande ; et
si l'on détermine que le rayon du cercle ou de l'arc de cercle est plus court que la moitié de la distance de déplacement prédéterminé, le déplacement du faisceau laser sur le cercle ou l'arc de cercle uniquement en faisant tourner le rotor.
